# EUROPÄISCHE PATENTSCHRIFT

(11) **EP 1 588 975 B1**
(45) Veröffentlichungstag und Bekanntmachung des Hinweises auf die Patenterteilung: **11.04.2012**
(21) Anmeldenummer: 05008722.0
(22) Anmeldetag: 21.04.2005
(51) Int. Cl.: B66B 7/08, F16G 11/12, F16B 7/06

(54) **Abhängeelement**
Coupling
Attelage

(30) Priorität: 21.04.2004 DE 102004020000
(43) Veröffentlichungstag der Anmeldung: 26.10.2005
(73) Patentinhaber: SACS GmbH, 78628 Rottweil (DE)
(72) Erfinder: Kuhm, Rolf, 71063 Sindelfingen (DE); Dratius, Oliver, 72458 Albstadt (DE)
(74) Vertreter: Patentanwälte Westphal, Mussgnug & Partner

(56) Entgegenhaltungen:
- DE-C- 720 193
- DE-U1- 20 307 918
- GB-A- 524 717

## Beschreibung

Die Erfindung betrifft ein Abhängeelement gemäß dem Oberbegriff des Patentanspruchs 1. Ein solches ist beispielsweise aus der Publikation GB 524 717 bekannt. Die Publikation DE 720 193 betrifft eine Spannschlosssicherung für den Flugzeugbau.

Bekannt sind Abhängeelemente, beispielsweise zum Abhängen, aber auch zum seitlichen Befestigen oder Abstützen von unten von Gepäckboxen, Schrankelementen oder sonstiger Innenausstattung in einem Flugzeug oder anderen Fahrzeugen wie z. B. Schiffen oder Eisenbahnwaggons, welche zwei Befestigungselemente aufweisen, die über einen Schaft, von denen wenigstens einer, vorzugsweise beide, ein Gewinde aufweist, von je einer Seite in je eine in ein im wesentlichen zylinderförmiges Mittelelement eingesetzte Gewindehülse eingreifen. Die Gewindehülse kann durch ein direkt in die Innenfläche des Mittelelements eingeschnittenes Gewinde ersetzt werden. Dabei weist eine der beiden Gewindehülsen ein Linksgewinde, die andere ein Rechtsgewinde auf, sodass durch Drehung des Mittelelements gegen die beiden Befestigungselemente die Gesamtlänge des Abhängeelements variiert werden kann. Durch eine variierbare Ausgestaltung der Länge der Abhängeelemente können gegebenenfalls unterschiedliche Deckenhöhen des Flugzeugs oder anderer Fahrzeuge ausgeglichen werden, damit die Gepäckboxen oder sonstige abzuhängende Elemente in einer horizontalen Ebene hängen.

Um sicherzustellen, dass sich die gewählte Länge des Abhängeelements nach der Einstellung nicht ändert, ist eine Sicherung derart vorgesehen, dass an den Schaft der Befestigungselemente ein Klemmelement, beispielsweise eine Kontermutter, angeordnet ist, welches nach der Einstellung festgezogen wird. Durch die Verklemmung des Gewindes des Schafts des Befestigungselements gegen die Gewindehülse wird eine kraftschlüssige Verdrehsicherung erzielt, welche eine Drehung des Befestigungselements gegen das Mittelelement und somit eine Längenänderung des Abhängeelements verhindert.

Nachteilig bei dieser Ausführung ist, dass einerseits nach Einstellen der optimalen Länge der Abhängeelemente das Klemmelement für jedes Abhängeelement separat von Hand oder mittels eines Werkzeugs festgezogen werden muss, was einen hohen Arbeits- und Zeitaufwand erfordert. Desweiteren besteht die Gefahr, dass sich eine Klemm- oder Schraubbefestigung bei Erschütterungen, wie sie insbesondere in Flugzeugen oder anderen Fahrzeugen auftreten, löst und die Möglichkeit besteht, dass sich die abgehängten Elemente absenken. Dadurch besteht insbesondere die Gefahr, dass auch Personen zu Schaden kommen können, falls über den Personen hängende Elemente plötzlich tief absinken.

Die Aufgabe der Erfindung besteht darin, ein Abhängeelement bereitzustellen, welches leichter zu handhaben ist und eine verbesserte Sicherung gegen Längenverstellungen aufweist.

Die Aufgabe der Erfindung wird gelöst durch ein Abhängeelement mit den kennzeichnenden Merkmalen des Patentanspruchs 1.

Vorteilhafte Ausgestaltungen und Weiterbildungen der Erfindung sind in den Unteransprüchen angegeben.

Die Erfindung betrifft ein Abhängeelement gemäß dem Oberbegriff des Anspruchs 1, wobei wenigtens einer der Schäfte, welche ein Gewinde aufweisen, an seiner Stirnfläche eine Zahnscheibe mit radial verlaufenden Zähnen aufweist, welche in auf der Stirnfläche einer Gegenzahnscheibe angeordnete radial verlaufende Zähne eingreifen, wobei die Gegenzahnscheibe auf ihrer Rückenfläche mit einem Federelement beaufschlagt wird.

In der Ruheposition drückt somit das Federelement die Gegenzahnscheibe gegen die Zahnscheibe des Schafts eines der Befestigungselemente. Ein Verdrehen des Befestigungselements gegen das Mittelelement ohne Aufbringen einer Kraft gegen die Federkraft ist somit nicht möglich, wodurch eine Verdrehsicherung gewährleistet ist. Im Gegensatz zu den bekannten Abhängeelementen ist eine Aktivierung der Verdrehsicherung durch festziehen eines Klemmelements nicht vonnöten. Es ist somit sichergestellt, dass in automatisch nach Einstellen der gewünschten Länge des Abhängeelements die Verdrehsicherung gewährleistet ist. Ein weiterer Vorteil liegt darin, dass die Verdrehsicherung auf einem kraft- und einem formschlüssigen Eingriff beruht und somit ein Lösen der Verdrehsicherung durch Vibrationen und Erschütterungen nicht möglich ist, da die Verzahnung der Zahnscheibe und der Gegenzahnscheibe durch die Beaufschlagung mit dem Federelement in jeder Position in festem, formschlüssigen Eingriff stehen.

Erfindungsgemäß ist in dem Mittelelement eine Führungshülse eingesetzt, welche eine axiale Öffnung mit der Innenkontur eines Mehrkants aufweist.

An der Gegenzahnscheibe ist an ihrer Rückenfläche ein Mehrkantrohr angeordnet. Greift das Mehrkantrohr in die axiale Öffnung der Führungshülse ein, welche gegenüber dem Mittelelement unverdrehbar angeordnet ist, ist über die Führung des Mehrkantrohrs die Gegenzahnscheibe in Bezug auf das Mittelelement verdrehsicher angeordnet.

Somit ist das Mehrkantrohr der Gegenzahnscheibe in der axialen Öffnung der Führungshülse verschiebbar, wobei durch die Abstimmung der Außenkontur des Mehrkantrohrs der Gegenzahnscheibe auf die Innenkontur der axialen Öffnung der Führungshülse eine verdrehsichere Verschiebbarkeit gewährleistet ist.

Vorzugsweise weisen beide Schafte ein Gewinde auf, welche in je eine in dem Mittelelement angeordnete Gewindehülse bzw. in ein in die Innenfläche des Mittelelements eingeschnittenes Gewinde eingreifen. Dies gewährleistet, dass die Länge des Abhängeelements auch dann noch variiert werden kann, wenn die beiden Befestigungselemente bereits an den zu beabstandenden Elementen, beispielsweise der Flugzeugdecke und einer Gepäckbox, befestigt wurden. Sind die beiden in dem Mittelelement angeordneten Gewindehülsen bzw. die in die Innenfläche des Mittelelements eingeschnittenen Gewinde je ein Rechts- und ein Linksgewinde, kann das Mittelelement bei feststehenden Befestigungselementen gedreht werden, wobei sich entweder beide Befestigungselemente aus dem Mittelelement heraus- oder beide Befestigungselemente in das Mittelelement hinein bewegen.

In einer vorteilhaften Weiterbildung der Erfindung weisen beide Schafte an ihrer Stirnfläche eine Zahnscheibe mit radial verlaufenden Zähnen auf, welche in auf der Stirnfläche einer Gegenzahnscheibe angeordnete radial verlaufende Zähne eingreifen, wobei die Gegenzahnscheiben auf ihrer Rückenfläche mit einem Federelement beaufschlagt werden. Auf diese Weise kann das erfindungsgemäße Abhängeelement symmetrisch ausgestaltet werden.

Bei einer vorteilhaften Weiterbildung der Erfindung lassen die Außenabmessungen des Mehrkantrohrs der Gegenzahnscheibe ein Spiel des Mehrkantrohrs in der axialen Öffnung der Führungshülse zu. Dies ist dann von Vorteil, wenn bei einer Drehung des Mittelelements die Zähne der Zahnscheibe mit ihrer Spitze nicht vollständig in einen Zahngrund der Gegenzahnscheibe gleiten, sondern auf einer Flanke der Zähne der Gegenzahnscheibe stehen bleiben sollten. In diesem Fall kann sich das Mehrkantrohr der Gegenzahnscheibe aufgrund des zugelassenen Spiels in der axialen Öffnung gegen das Mittelelement und somit gegen die Zahnscheibe des Schafts des Befestigungselements geringfügig bewegen, wodurch die Zähne der Zahnscheibe in die Zwischenräume zwischen den Zähnen der Gegenzahnscheibe rutschen können, so dass in jeder Position ein formschlüssiger Eingriff der Zahnscheibe in die Gegenzahnscheibe gewährleistet ist.

Vorzugsweise stützt sich das Federelement gegen die Rückenfläche der Gegenzahnscheibe und die Führungshülse abstützt.

Bei einer vorteilhaften Weiterbildung der Erfindung sind in die Stirnflächen des Mittelelements Kunststoffringe, vorzugsweise Polyamid-Ringe einsetzbar. Diese dichten den Schaft der Befestigungselemente gegen das Mittelelement ab und verhindern somit das Eindringen insbesondere von Wasser. Eine besonders wirksame Dichtung wird erzielt, wenn die Kunststoffringe nach Einsetzen in das Mittelelement in dieses eingebördelt werden.

Vorzugsweise stehen die Flanken der Zähne der Zahnscheibe und der Gegenzahnscheibe zueinander in einem Winkel von 60° bis 120°, vorzugsweise in einem Winkel von 90°. Bei größeren Winkeln kann der Eingriff der Zähne kaum noch durch Drehung überwunden werden, bei kleineren Winkeln lässt sich der Eingriff verhältnismäßig leicht überwinden und stellt kaum noch eine zuverlässige Verdrehsicherung dar. Bei einem Anstellwinkel der Flanken von 90° wird ein formschlüssiger Eingriff der Zähne gewährleistet.

Vorzugsweise sind auf der Stirnfläche der Zahnscheibe und der Stirnfläche der Gegenzahnscheibe jeweils zwei bis sechzehn, vorzugsweise sechs Zähne angeordnet. Die Zahl der Zähne beeinflusst die Längenänderung des Abhängeelements. Bei einer kleinen Anzahl von Zähnen entspricht jede Verdrehung um einen Zahn einer größeren Längenänderung als bei einer großen Anzahl von Zähnen. Eine größere Anzahl von Zähnen bedingt jedoch bei gleicher Höhe der Zähne einen steileren Winkel zwischen den Zähnen, welcher durch Drehung nicht mehr überwunden werden kann oder bei gleichbleibendem Winkel eine kleinere Höhe, die keinen zuverlässigen Eingriff der Zähne mehr gewährleistet.

Vorzugsweise beträgt die Gesamtlänge des Abhängeelements 20 mm bis 2000 mm beträgt. Je nach auftretenden auszugleichenden Unterschieden in den Deckenhöhen können somit die geeigneten Abhängeelemente gewählt werden.

Besonders bevorzugt ist eine Ausgestaltung derart, dass durch Drehung wenigstens eines der Befestigungselemente gegen das Mittelelement eine Längenänderung des Abhängeelements von 0,1 mm bis 100 mm erreichbar ist. Somit können alle üblichen Unregelmäßigkeiten und unterschiedlichen Deckenhöhen mit einem Typ von Abhängeelement ausgeglichen werden.

Bei einer vorteilhaften Weiterbildung der Erfindung entspricht die Drehung der Verzahnung um einen Zahn einer Längenänderung des Abhängeelements von 0,1 mm bis 10 mm entspricht. Die Längenänderung hängt sowohl von der Anzahl der Zähne auf der Zahnscheibe bzw. der Gegenzahnscheibe als auch von der Ganghöhe der Gewinde in den Gewindehülsen des Mittelelements ab. Sind diese optimal aufeinander abgestimmt, sind derart geringe Längenänderungen möglich, so dass alle Unregelmäßigkeiten ausgeglichen werden können. Längenänderungen von weniger als 0,1 mm müssen in der Regel nicht mehr ausgeglichen werden, da sie innerhalb der Toleranzgrenzen liegen.

Besonders bevorzugt entspricht die Drehung der Verzahnung um einen Zahn einer Längenänderung des Abhängeelements von 0,1 bis 5 mm entspricht.

Vorzugsweise weist das Mittelelement auf der Außenseite eine Profilstruktur auf. Diese erhöht die Griffsicherheit der Person, welche das Mittelelement verdrehen möchte.

Vorteilhafterweise ist wenigstens ein Befestigungselement als Gabelkopf ausgebildet ist.

Vorzugsweise ist wenigstens ein Befestigungselement als Gelenklagerkopf ausgebildet. Durch die Ausbildung des Befestigungselement als Gelenklager können eventuelle Achsversätze zwischen der Achse des Gelenklagers und der Achse des einzubringenden Elements, beispielsweise eines Bolzens, ausgeglichen werden.

Ein Ausführungsbeispiel der Erfindung soll anhand der folgenden Figuren ausführlich erläutert werden. Es zeigt:
- Figur 1a: einen Axialschnitt durch ein Ausführungsbeispiel der Erfindung im montierten Zustand,
- Figur 1b: eine perspektivische Ansicht des Innenaufbaus des Ausführungsbeispiels gemäß Figur 1,
- Figur 2: einen Querschnitt durch das Mittelelement des Äusfüh- rungsbeispiels aus Figur 1,
- Figur 3a: eine perspektivische Ansicht der Zahnscheibe des Aus- führungsbeispiels aus Figur 1,
- Figur 3b: einen Axialschnitt der Zahnscheibe des Ausführungs- beispiels aus Figur 1,
- Figur 3c: eine Seitenansicht der Zahnscheibe des Ausführungs- beispiels aus Figur 1,
- Figur 3d: eine Draufsicht auf die Zahnscheibe des Ausführungs- beispiels aus Figur 1,
- Figur 4a: eine Seitenansicht der Gegenzahnscheibe des Ausführungsbeispiels aus Figur 1,
- Figur 4b: eine Draufsicht auf die Gegenzahnscheibe des Ausfüh- rungsbeispiels aus Figur 1,
- Figur 4c: Ansicht gemäß Linie X aus Figur 4a auf die Gegenzahn- scheibe des Ausführungsbeispiels aus Figur 1,
- Figur 4d: einen Axialschnitt der Gegenzahnscheibe des Ausfüh- rungsbeispiels aus Figur 1 und
- Figur 4e: eine perspektivische Ansicht der Gegenzahnscheibe des Ausführungsbeispiels aus Figur 1.

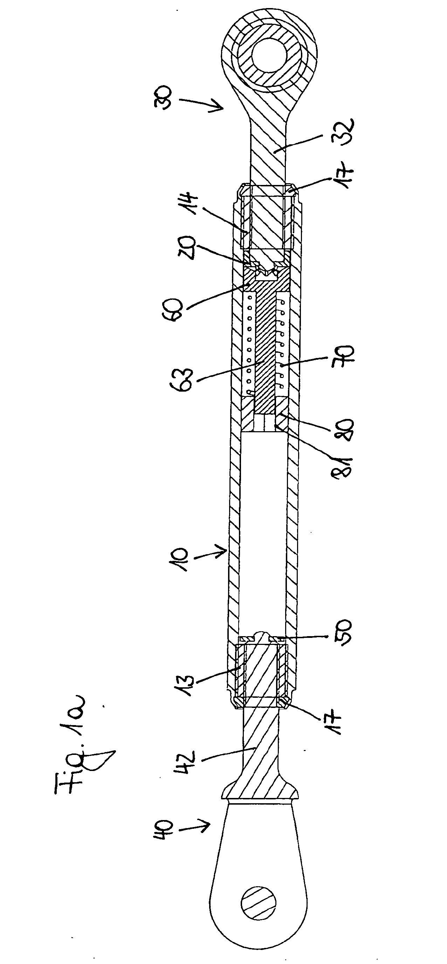

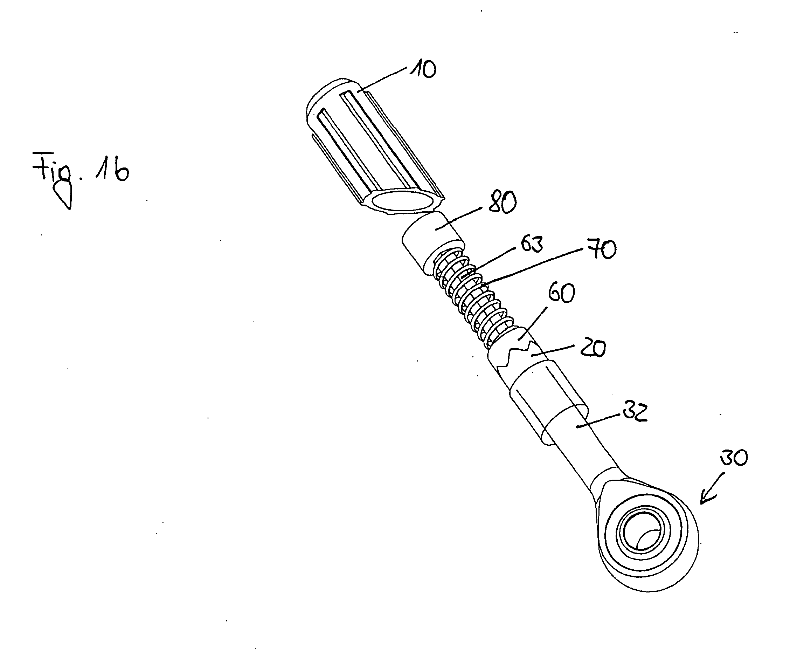

Figur 1 zeigt einen Axialschnitt durch ein erfindungsgemäßes Abhängeelement mit einem Mittelelement 10, einem ersten Befestigungselement 30 und einem zweiten Befestigungselement 40.

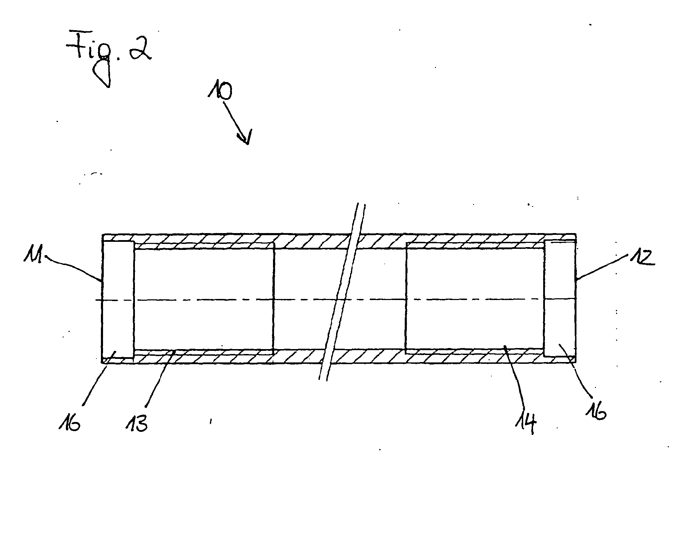

Das Mittelelement 10 besteht aus einem runden Hohlrohr mit zwei Stirnflächen 11, 12 (vgl. Fig. 2). Ausgehend von den Stirnflächen ist der Innendurchmesser des Mittelelements in einem Abschnitt 16 aufgeweitet, um den Einsatz von zwei Polyamidringen 17 zu ermöglichen. An den aufgeweiteten Abschnitt 16 schließt sich jeweils eine Gewindehülse 13, 14 an. Die Gewindehülsen 13, 14 können auch durch ein in die Innenfläche des Mittelelements eingeschnittenes Gewinde ersetzt werden. Dabei weist eine der Gewindehülsen 13, 14 ein Rechtsgewinde und die andere der Gewindehülsen 13, 14 ein Linksgewinde auf. Die Gewindehülsen 13, 14 sind verdrehsicher in dem Mittelelement 10 befestigt, beispielsweise durch Einkleben.

In die Gewindehülsen 13, 14 wird je eins der Befestigungselemente 30, 40 eingesetzt. Dazu weisen die Befestigungselemente jeweils einen Schaft 32, 42 auf, welcher ein der jeweiligen Gewindehülse 13, 14 entsprechendes Gewinde aufweist. Die freien Enden der Schäfte 32, 42 enden in einer Stirnfläche 33, 43. die beiden Befestigungselemente 30, 40 können somit in die in das Mittelelement 10 eingelassenen Gewindehülsen 13, 14 eingedreht werden.

Die Polyamidringe 17 dichten die Schäfte 32, 42 der Befestigungselemente 30, 40 gegen das Mittelelement 10 ab. Nach Einsatz der Polyamidringe 17 in die Abschnitte 16 werden die Polyamidringe 17 eingebördelt (s. Fig. 1a), um die Dichtigkeit zu erhöhen und insbesondere das Eindringen von Wasser in den Innenraum des Mittelelements 10 zu verhindern.

Auf die Stirnfläche 43 des zweiten Befestigungselements 40 ist eine Scheibe 50 aufgesetzt, welche beispielsweise aufgeklebt oder aufgenietet ist, um sicherzustellen, dass das Befestigungselement 40 nicht vollständig aus dem Gewinde 13 herausgedreht werden kann.

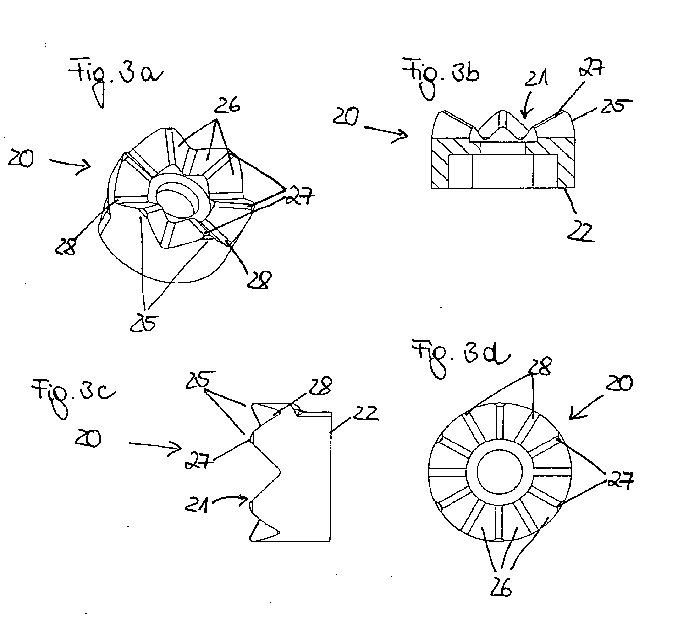

Auf die Stirnfläche 33 des ersten Befestigungselements 30 ist eine Zahnscheibe 20 aufgesetzt, welche ebenfalls fest mit dem Schaft 32 verbunden ist, beispielsweise durch Aufnieten oder Verkleben. Die Zahnscheibe 20 weist eine glatte Bodenfläche 22 und eine Stirnfläche 21 auf, auf welcher mehrere radial verlaufende Zähne 25 mit Flanken 26, Zahnspitzen 27 und Zahngründen 28 angeordnet sind (vgl. Figuren 3a bis 3d). Im vorliegenden Beispiel sind die Flanken 26 der Zähne 25 im rechten Winkel zueinander angeordnet, sodass sich symmetrische Zähne ergeben. Die Zähne können jedoch auch asymmetrisch oder wellenförmig ausgebildet sein. Die Zahnspitzen 27 weisen einen Radius auf und sind somit leicht abgerundet, so dass die Bewegung der Zahnspitzen nicht zu übermäßen Belastungen führt. In die ebene Bodenfläche 22 der Zahnscheibe 20 ist eine Vertiefung eingelassen, in welche der Schaft 33 des Befestigungselements 30 eingesetzt wird.

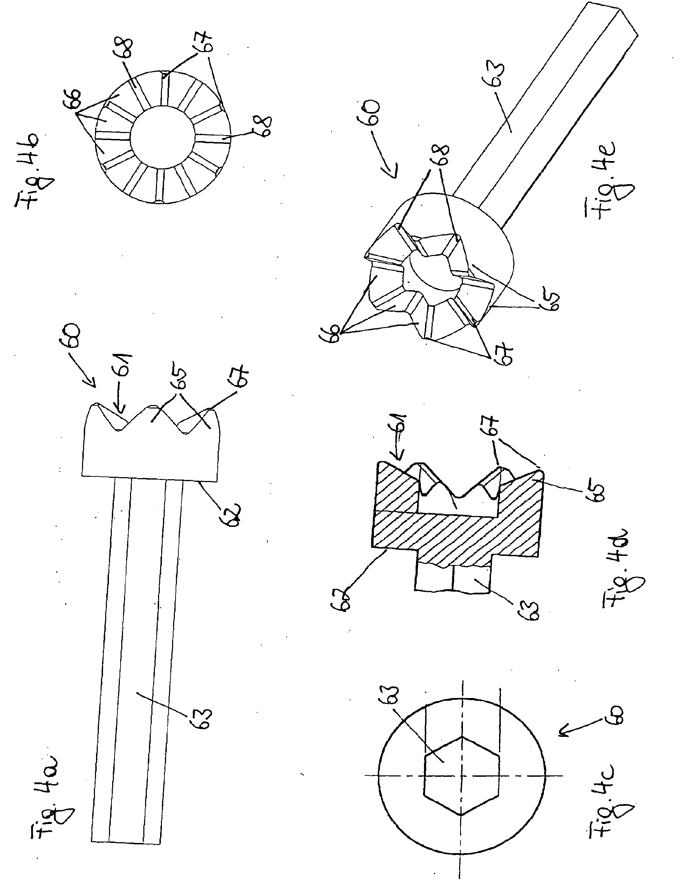

Im Innenraum des Mittelelements 10 ist eine Gegenzahnscheibe 60 verschiebbar angeordnet. Die Gegenzahnscheibe 60 weist eine glatte Rückenfläche 62 und eine Stirnfläche 61 auf, auf welcher mehrere radial verlaufende Zähne 65 mit Flanken 66, Zahnspitzen 67 und Zahngründen 68 angeordnet sind (vgl. Figuren 4a bis 4e). Im vorliegenden Beispiel sind die Flanken 66 der Zähne 65 im rechten Winkel zueinander angeordnet, sodass sich symmetrische Zähne ergeben. Die Zahnspitzen 67 sind ebenfalls leicht abgerundet. Die Gegenzahnscheibe 60 ist so im Innenraum des Mittelelements 10 angeordnet, dass ihre Stirnfläche 61 der Stirnfläche 21 der am Befestigungselement 30 angeordneten Zahnscheibe 20 zugewandt ist. Die Zähne 25 der Zahnscheibe 20 stehen so mit den Zähnen 65 der Gegenzahnscheibe 60 in Eingriff und bilden eine Verzahnung. Durch die symmetrische Ausgestaltung der Zähne 25 und 65 ist ein optimaler formschlüssiger Eingriff gewährleistet.

An der Rückenfläche 62 ist ein axial verlaufender Mehrkantschaft 63 angeordnet.

In das Mittelelement 10 ist eine Führungshülse 80 eingesetzt, welche in ihrem Außendurchmesser mit dem Innendurchmesser des Mittelelements 10 übereinstimmt. Die Führungshülse 80 ist somit verdrehsicher in das Mittelelement 10 eingepresst. Zur Erhöhung der Verdrehsicherheit können zusätzliche profilierte Oberflächen auf der Innenfläche des Mittelelemente 10 oder auf der Außenfläche der Führungshülse 80 angebracht werden.

Die Führungshülse 81 weist eine axiale Durchgangsöffnung 81 mit der Innenkontur eines Mehrkants auf. Die Innenkontur der axialen Durchgangsöffnung 81 entspricht dabei der Außenkontur des Mehrkantschafts 63 der Gegenzahnscheibe 60, so dass die Gegenzahnscheibe 60 beweglich in der Führungshülse 80 verschiebbar ist. Die Innenkontur der Durchgangsöffnung 81 bzw. die Außenkontur des Mehrkantschafts 63 kann ein beliebiges Polygon sein, welches die Verdrehsicherheit des Mehrkantschafts 63 gegenüber der Führungshülse 80 gewährleistet. Beispielsweise kann der Mehrkantschaft 63 als zylindrisches Rohr mit einer an der Oberfläche axial verlaufenden Nut ausgebildet sein, in welche ein entsprechend geformter Steg einer ansonsten zylindrisch ausgebildeten Durchgangsöffnung 81 eingreift. Vorliegend ist der Querschnitt des Mehrkantschafts 63 und der Querschnitt der Durchgangsöffnung 81 als regelmäßiges 6-Eck ausgebildet. Der Mehrkantschaft 63 ist somit in der Durchgangsöffnung 81 verschiebbar.

Zwischen der Führungshülse 80 und der Gegenzahnscheibe 60 ist ein Federelement 70, vorliegend eine Spiralfeder, angeordnet, welche sich gegen die Führungshülse 80 und die Rückenfläche 62 des Gegenzahnscheibe 60 abstützt und somit eine Beaufschlagung der Gegenzahnscheibe 60 bewirkt. Die bewegliche Gegenzahnscheibe 60 wird somit stets gegen die Zahnscheibe 20 des Befestigungselements 30 gedrückt (vgl. Fig. 1a, 1b).

Sowohl die Zahnscheibe 20 als auch die Gegenzahnscheibe 60 sind über den gesamten Umfang mit radial verlaufenden, äquidistant angeordneten Zähnen 25, 65 versehen. Selbstverständlich können sowohl die Zahnscheibe 20 als auch die Gegenzahnscheibe 60 auch nur abschnittsweise mit radial verlaufenden Zähnen ausgestattet sein.

Die Außenkonturen des Mehrkantschafts 63 erlauben ein Spiel in der Durchgangsöffnung 81. Der Vorteil eines solchen Spiels liegt darin, dass, falls bei einer Drehung des Mittelelements 10 die Zähne 25 der Zahnscheibe 20 mit ihrer Spitze 27 nicht vollständig in die Zahngründe 68 gleiten sollten, sondern auf den Flanken 66 der Zähne 65 der Gegenzahnscheibe 60 stehen bleiben sollten, sich das Mehrkantrohr 63 der Gegenzahnscheibe 60 aufgrund des zugelassenen Spiels in der axialen Durchgangsöffnung 81 gegen das Mittelelement 10 und somit gegen die Zahnscheibe 20 des Schafts 32 des Befestigungselements 30 geringfügig bewegen kann, wodurch die Zähne 25 der Zahnscheibe 20 aufgrund der Beaufschlagung durch das Federelement 70 in die Zahngründe 68 zwischen den Zähnen 65 der Gegenzahnscheibe 60 rutschen können, so dass in jeder Position ein formschlüssiger Eingriff der Zahnscheibe 20 in die Gegenzahnscheibe 60 gewährleistet ist.

Das erfindungsgemäße Abhängeelement arbeitet auf folgende Weise. Bei Drehung des Mittelelements 10 bei feststehenden Befestigungselementen 30, 40 wird aufgrund der gegensinnigen Gewinde der beiden Gewindehülsen 13, 14 die Länge des Abhängeelements dadurch variiert, dass entweder beide Befestigungselemente 30, 40 in das Mittelelement 10 hineingezogen oder herausgeschoben werden. Die Verdrehung des Mittelelements 10 wird dem Benutzer dadurch erleichtert, dass auf der Oberfläche des Mittelelements 10 eine Profilstruktur angeordnet ist.

Bei der Verwendung der Abhängeelemente in Fahrzeugen oder sonstigen Vorrichtungen, die starken Erschütterungen ausgesetzt sind, muss garantiert sein, dass sich die einmal eingestellte Länge nicht ändert und somit, dass sich das Mittelelement 10 nicht gegen die Befestigungselemente 30, 40 verdrehen kann. Dies ist durch die Verzahnung der Zahnscheibe 20 mit der Gegenzahnscheibe 60 unter Beaufschlagung durch das Federelement 70 sichergestellt. Bei Verdrehung des Mittelelements 10 gegen die Befestigungselemente 30, 40 verschieben sich die Flanken 26, 66 der Zähne 25 der Zahnscheibe 20 und der Zähne 65 der Gegenzahnscheibe 60 derart, dass die Zahnspitzen 27 der Zähne 25 der Zahnscheibe 20 auf den Flanken 66 der Zähne 65 entlang laufen, bis die Zahnspitzen 27 der Zähne 25 auf den Zahnspitzen 67 der Zähne 65 stehen, um anschließend auf der anderen Seite des Zahnes 65 in den Zahngrund 68 wieder herabzugleiten. Eine derartige Verdrehung um einen Zahn bewirkt die kleinstmögliche Längenänderung, deren Absolutbetrag sowohl von der Breite der Zähne 25, 65 als auch von der Ganghöhe der Gewinde 13, 14 abhängig ist. Dabei können minimale Änderungen der Länge der Abhängeelemente von 0,1 mm bis zu 10 mm erreicht werden. Die maximale Längenänderung des Abhängeelements hängt von der Länge des Gewindes auf dem Schaft des Befestigungselements 30, 40 und der Länge der Gewindehülsen 13, 14 ab und kann bis zu 100 mm betragen. Die Gesamtlänge der unterschiedlichen Typen von Abhängeelementen variiert zwischen 20 und 2000 mm

Die Ausgestaltung der Befestigungselemente ist von dem Anwendungsfall der Abhängeelemente abhängig. Im vorliegenden Ausführungsbeispiel ist das erste Befestigungselement 30 als Gelenkkopf ausgebildet. Das zweite Befestigungselement 40 ist als Gabelkopf ausgebildet. Die Art der Befestigungselemente ist jedoch nicht erfindungswesentlich. Insbesondere können auch beide Befestigungselemente 30, 40 als Gelenkkopf oder als Gabelkopf ausgebildet sein.

### Bezugszeichenliste

- 10: Mittelelement
- 11: Stirnfläche
- 12: Stirnfläche
- 13: Gewindehülse
- 14: Gewindehülse
- 16: Abschnitt
- 17: Kunststoffring
- 20: Zahnscheibe
- 21: Stirnfläche
- 22: Bodenfläche
- 25: Zahn
- 26: Flanke
- 27: Zahnspitze
- 28: Zahngrund
- 30: Befestigungselement
- 32: Schaft
- 33: Stirnfläche
- 40: Befestigungselement
- 42: Schaft
- 43: Stirnfläche
- 50: Scheibe
- 60: Gegenzahnscheibe
- 61: Stirnfläche
- 62: Rückenfläche
- 63: Mehrkantschaft
- 65: Zahn
- 66: Flanke
- 67: Zahnspitze
- 68: Zahngrund
- 70: Federelement
- 80: Führungshülse
- 81: axiale Durchgangsöffnung

## Patentansprüche

1. Abhängeelement
mit zwei Befestigungselementen (30, 40), welche jeweils einen Schaft (32, 42)aufweisen, wobei wenigstens ein Schaft (32, 42) ein Gewinde aufweist, und
mit einem Mittelelement (10), welches in wenigstens einer der Stirnflächen (11, 12) eine Gewindehülse (13, 14) oder ein in die Innenfläche des Mittelelements (10) eingeschnittenes Gewinde aufweist, und in welches an den sich gegenüberliegenden Stirnflächen (11, 12) die Befestigungselemente (30, 40) eingreifen,
wobei wenigstens einer der Schäfte (32, 42), welche ein Gewinde aufweisen, an seiner Stirnfläche (33) eine Zahnscheibe (20) mit radial verlaufenden Zähnen (25) aufweist, welche in auf der Stirnfläche (61) einer Gegenzahnscheibe (60) angeordnete radial verlaufende Zähne (65) eingreifen,
wobei die Gegenzahnscheibe (60) auf ihrer RUckenfläche (62) mit einem Federelement (70) beaufschlagt wird, **dadurch gekennzeichnet,**
**dass** in dem Mittelelement (10) eine Führungshülse (80) eingesetzt ist, welche eine axiale Durchgangsöffnung (81) mit der Innenkontur eines Mehrkants aufweist,
**dass** an der Gegenzahnscheibe (60) an ihrer Rückenfläche (62) ein Mehrkantschaft (63) angeordnet ist, und
**dass** der Mehrkantschaft (63) der Gegenzahnscheibe (60) in der axialen Durchgangsöffnung (81) der Führungshülse (80) verschiebbar ist.

2. Abhängeelement nach Anspruch 1,
**dadurch gekennzeichnet, dass** beide Schäfte (32, 42) ein Gewinde aufweisen, welche in je eine in dem Mittelelement (10) angeordnete Gewindehülse (13, 14) oder ein in die Innenfläche des Mittelelements (10) eingeschnittenes Gewinde eingreifen.

3. Abhängeelement nach Anspruch 2,
**dadurch gekennzeichnet, dass** die beiden Gewindehülsen (13, 14) bzw. die beiden eingeschnittenen Gewinde des Mittelelements (10) je ein Rechts- bzw. ein Linksgewinde aufweisen.

4. Abhängeelement nach einem der vorhergehenden Ansprüche, **dadurch gekennzeichnet, dass** beide Schäfte an ihrer Stirnfläche eine Zahnscheibe mit radial verlaufenden Zähnen aufweisen, welche in auf der Stirnfläche einer Gegenzahnscheibe angeordnete radial verlaufende Zähne eingreifen, wobei die Gegenzahnscheiben auf ihrer Rückenfläche mit einem Federelement beaufschlagt werden.

5. Abhängeelement nach einem der vorhergehenden Ansprüche, **dadurch gekennzeichnet, dass** die Außenabmessungen des Mehrkantschafts (63) der Gegenzahnscheibe (60) ein Spiel des Mehrkantschafts (63) in der axialen Durchgangsöffnung (81) der Führungshülse (80) zulassen.

6. Abhängeelement nach einem der vorhergehenden Ansprüche, **dadurch gekennzeichnet, dass** sich das Federelement (70) gegen die Rückenfläche (62) der Gegenzahnscheibe (60) und die Führungshülse (80) abstützt.

7. Abhängeelement nach einem der vorhergehenden Ansprüche, **dadurch gekennzeichnet, dass** in die Stirnflächen (11, 12) des Mittelelements (10) Kunststoffringe (17) einsetzbar sind.

8. Abhängeelement nach Anspruch 7, bei dem die Kunststoffringe (17)Polyamid-Ringe sind.

9. Abhängeelement nach einem der vorhergehenden Ansprüche,
**dadurch gekennzeichnet, dass** die Flanken (26, 66) der Zähne (25, 65) der Zahnscheibe (20) und der Gegenzahnscheibe (60) zueinander in einem Winkel von 60° bis 120° stehen.

10. Abhängeelement nach Anspruch 9, bei dem die Flanken (26, 66) der Zähne (25, 65) der Zahnscheibe (20) und der Gegenzahnscheibe (60) zueinander in einem Winkel von 90° stehen

11. Abhängeelement nach einem der vorhergehenden Ansprüche,
**dadurch gekennzeichnet, dass** auf der Stirnfläche (21) der Zahnscheibe (20) und der Stirnfläche (61) der Gegenzahnscheibe (60) jeweils zwei bis sechzehn angeordnet sind.

12. Abhängeelement nach Anspruch 11, bei dem auf der Stirnfläche (21) der Zahnscheibe (20) und der Stirnfläche (61) der Gegenzahnscheibe (60) jeweils sechs Zähne (25, 65) angeordnet sind.

13. Abhängeelement nach einem der vorhergehenden Ansprüche,
**dadurch gekennzeichnet, dass** durch Drehung wenigstens eines der Befestigungselemente (30, 40) gegen das Mittelelement (10) eine Längenänderung des Abhängeelements von 0,1 mm bis 100 mm erreichbar ist.

14. Abhängeelement nach einem der vorhergehenden Ansprüche,
**dadurch gekennzeichnet, dass** die Drehung der Verzahnung um einen Zahn einer Längenänderung des Abhängeelements von 0,1 mm bis 10 mm entspricht.

15. Abhängeelement nach einem der vorhergehenden Ansprüche, **dadurch gekennzeichnet, dass** die Drehung der Verzahnung um einen Zahn einer Längenänderung des Abhängeelements von 0,1 bis 5 mm entspricht.

16. Abhängeelement nach einem der vorhergehenden Ansprüche, **dadurch gekennzeichnet, dass** das Mittelelement (10) auf der Außenseite eine Profilstruktur aufweist.

17. Abhängeelement nach einem der vorhergehenden Ansprüche, **dadurch gekennzeichnet, dass** wenigstens ein Befestigungselement (40) als Gabelkopf ausgebildet ist.

18. Abhängeelement nach einem der vorhergehenden Ansprüche, **dadurch gekennzeichnet, dass** wenigstens ein Befestigungselement (30) als Gelenklagerkopf ausgebildet ist.

19. Abhängeelement nach einem der vorhergehenden Ansprüche, **dadurch gekennzeichnet, dass** die Gesamtlänge des Abhängeelements 20 mm bis 2000 mm beträgt.

## Claims

1. A suspension element
with two fastening elements (30, 40) which have a shank (32, 42) in each case, wherein at least one shank (32, 42) has a thread, and
with a middle element (10) which in at least one of the end faces (11, 12) has a threaded sleeve (13, 14) or a thread cut into the inner face of the middle element (10) and into which the fastening elements (30, 40) engage on the mutually opposed end faces (11, 12),
wherein at least one of the shanks (32, 42), which has a thread, has on its end face (33) a crown wheel (20) with teeth (25) which extend radially and which engage in radially extending teeth (65) arranged on the end face (61) of a counter crown wheel (60), wherein the rear face (62) of the counter crown wheel (60) is acted upon with a spring element (70), **characterized in that** a guide sleeve (80) which has an axial through opening (81) with the inner contour of a polygon is inserted into the middle element (10), a polygonal shank (63) is arranged on the rear face (62) of the counter crown wheel (60), and
the polygonal shank (63) of the counter crown wheel (60) is displaceable in the axial through opening (81) of the guide sleeve (80).

2. A suspension element according to claim 1, **characterized in that** the two shanks (32, 42) have a thread which engage[s] in each case in a threaded sleeve (13, 14) arranged in the middle element (10) or a thread cut into the inner face of the middle element (10).

3. A suspension element according to claim 2, **characterized in that** the two threaded sleeves (13, 14) or the two threads cut into the middle element (10) have in each case a right-hand thread and a left-hand thread respectively.

4. A suspension element according to any one of the preceding claims, **characterized in that** the end faces of the two shanks have a crown wheel with teeth which extend radially and which engage in radially extending teeth arranged on the end face of a counter crown wheel, wherein the rear faces of the counter crown wheels are acted upon with a spring element.

5. A suspension element according to any one of the preceding claims, **characterized in that** the external dimensions of the polygonal shank (63) of the counter crown wheel (60) allows play of the polygonal shank (63) in the axial through opening (81) of the guide sleeve (80).

6. A suspension element according to any one of the preceding claims, **characterized in that** the spring element (70) is supported against the rear face (62) of the counter crown wheel (60) and the guide sleeve (80).

7. A suspension element according to any one of the preceding claims, **characterized in that** rings (17) of plastics material are capable of being inserted into the end faces (11, 12) of the middle element (10).

8. A suspension element according to claim 7, in which the rings (17) of plastics material are polyamide rings.

9. A suspension element according to any one of the preceding claims, **characterized in that** the flanks (26, 66) of the teeth (25, 65) of the crown wheel (20) and of the counter crown wheel (60) are at an angle of from 60° to 120° to one another.

10. A suspension element according to claim 9, in which the flanks (26, 66) of the teeth (25, 65) of the crown wheel (20) and of the counter crown wheel (60) are at an angle of 90° to one another.

11. A suspension element according to any one of the preceding claims, **characterized in that** from two to sixteen [teeth] are arranged in each case on the end face (21) of the crown wheel (20) and the end face (61) of the counter crown wheel (60).

12. A suspension element according to claim 11, in which six teeth (25, 65) are arranged in each case on the end face (21) of the crown wheel (20) and the end face (61) of the counter crown wheel (60).

13. A suspension element according to any one of the preceding claims, **characterized in that** a change in the length of the suspension element of from 0.1 mm to 100 mm is capable of being achieved by the rotation of at least one of the fastening elements (30, 40) towards the middle element (10).

14. A suspension element according to any one of the preceding claims, **characterized in that** the rotation of the set of teeth by one tooth corresponds to a change in the length of the suspension element of from 0.1 mm to 10 mm.

15. A suspension element according to any one of the preceding claims, **characterized in that** the rotation of the set of teeth by one tooth corresponds to a change in the length of the suspension element of from 0.1 mm to 5 mm.

16. A suspension element according to any one of the preceding claims, **characterized in that** the middle element (10) has a profiled structure on the outside.

17. A suspension element according to any one of the preceding claims, **characterized in that** at least one fastening element (40) is designed in the form of a fork head.

18. A suspension element according to any one of the preceding claims, **characterized in that** at least one fastening element (30) is designed in the form of a pivot bearing head.

19. A suspension element according to any one of the preceding claims, **characterized in that** the total length of the suspension element amounts to from 20 mm to 2000 mm.

## Revendications

1. Elément d'attelage comportant :
- deux éléments de fixation (30, 40) ayant chacun une tige (32, 42) dont au moins l'une (32, 42) comporte un filetage, et
- un élément intermédiaire (10) dont au moins l'une des surfaces frontales (11, 12) comporte un manchon fileté (13, 14) ou un taraudage réalisé dans la surface intérieure de l'élément intermédiaire (10), et dont les surfaces frontales opposées (11, 12) reçoivent les éléments de fixation (30, 40),
* au moins l'une des tiges (32, 42) munie d'un filetage, comporte au niveau de sa surface frontale (33), un disque cranté (20) avec des dents radiales (25) venant en prise dans des dents radiales (65) de la surface frontale (61) d'un disque denté complémentaire (60), sollicité par un élément de ressort (70) agissant sur sa surface arrière (62),
élément d'attelage **caractérisé en ce que**
- l'élément intermédiaire (10) loge un manchon de guidage (80) ayant un orifice traversant (81), axial, avec un contour intérieur multipans,
- le disque denté complémentaire (60) a une tige multipans (63) sur sa surface arrière (62), et
- la tige multipans (63) du disque denté complémentaire (60) coulisse dans l'orifice traversant axial (81) du manchon de guidage (80).

2. Elément d'attelage selon la revendication 1,
**caractérisé en ce que**
les deux tiges (32, 42) ont un filetage en prise respectivement dans un manchon fileté (13, 14) associé à l'élément intermédiaire (10) ou dans un taraudage taillé dans la surface intérieure de l'élément intermédiaire (10).

3. Elément d'attelage selon la revendication 2,
**caractérisé en ce que**
les deux manchons filetés (13, 14) ou les deux filetages taillés dans l'élément intermédiaire (10) ont respectivement un pas à droite et un pas à gauche.

4. Elément d'attelage selon l'une des revendications précédentes,
**caractérisé en ce qu'**
la surface frontale des deux tiges a chacune un disque denté avec des dents dirigées radialement, qui viennent prendre dans les dents dirigées radialement de la surface frontale d'un disque denté complémentaire, lui-même sollicité par un élément de ressort appliqué contre sa surface arrière.

5. Elément d'attelage selon l'une des revendications précédentes,
**caractérisé en ce que**
les dimensions extérieures de la tige multipans (63) du disque denté complémentaire (60) autorisent le jeu de la tige multipans (63) dans l'orifice axial (81) traversant du manchon de guidage (80).

6. Elément d'attelage selon l'une des revendications précédentes,
**caractérisé en ce que**
l'élément de ressort (70) s'appuie contre la surface arrière (62) du disque denté complémentaire (60) et du manchon de guidage (80).

7. Elément d'attelage selon l'une des revendications précédentes,
**caractérisé en ce que**
des anneaux en matière plastique (17) sont logés dans les surfaces frontales (11, 12) de l'élément intermédiaire (10).

8. Elément d'attelage selon la revendication 7,
**caractérisé en ce que**
les anneaux en matière plastique (17) sont des anneaux en polyamide.

9. Elément d'attelage selon l'une des revendications précédentes,
**caractérisé en ce que**
les flancs (26, 66) des dents (25, 65) du disque denté (20) et du disque denté complémentaire (60) sont réparties suivant un angle de 60° à 120°.

10. Elément d'attelage selon la revendication 9,
**caractérisé en ce que**
les flancs (26, 66) des dents (25, 65) du disque denté (20) et du disque denté complémentaire (60) font entre eux un angle de 90°.

11. Elément d'attelage selon l'une des revendications précédentes,
**caractérisé en ce que**
la surface frontale (21) du disque denté (20) et la surface frontale (61) du disque denté complémentaire (60) ont chacune entre deux et six dents.

12. Elément d'attelage selon la revendication 11,
**caractérisé en ce que**
la surface frontale (21) du disque denté (20) et la surface frontale (61) du disque denté complémentaire (60) ont chacune six dents (25, 65).

13. Elément d'attelage selon l'une des revendications précédentes,
**caractérisé en ce que**
la rotation d'au moins l'un des éléments de fixation (30, 40) par rapport à l'élément intermédiaire (10) modifie la longueur de l'élément d'attelage entre 0,1 mm et 100 mm.

14. Elément d'attelage selon l'une des revendications précédentes,
**caractérisé en ce que**
la rotation de la denture d'une dent correspond à une variation de longueur de l'élément d'attelage comprise entre 0,1 mm et 10 mm.

15. Elément d'attelage selon l'une des revendications précédentes,
**caractérisé en ce que**
la rotation de la denture d'une dent correspond à une variation de longueur de l'élément d'attelage comprise entre 0,1 et 5 mm.

16. Elément d'attelage selon l'une des revendications précédentes,
**caractérisé en ce que**
l'élément intermédiaire (10) a un côté extérieur muni d'une structure profilée.

17. Elément d'attelage selon l'une des revendications précédentes,
**caractérisé en ce qu'**
au moins un élément de fixation (40) est réalisé comme tête à fourche.

18. Elément d'attelage selon l'une des revendications précédentes,
**caractérisé en ce qu'**
au moins un élément de fixation (30) est réalisé comme tête à palier articulé.

19. Elément d'attelage selon l'une des revendications précédentes,
**caractérisé en ce que**
la longueur totale de l'élément d'attelage correspond à 20 mm jusqu'à 2000 mm.
